Europäisches Patentamt

European Patent Office

Office européen des brevets

(11) Veröffentlichungsnummer: **0 212 732**
**A2**

(12) **EUROPÄISCHE PATENTANMELDUNG**

(21) Anmeldenummer: 86201353.9

(22) Anmeldetag: 01.08.86

(51) Int. Cl.4: **G02B 6/44**

(30) Priorität: **14.08.85 DE 3529085**

(43) Veröffentlichungstag der Anmeldung:
**04.03.87 Patentblatt 87/10**

(84) Benannte Vertragsstaaten:
**AT CH DE FR GB LI NL**

(71) Anmelder: **Philips Patentverwaltung GmbH**
**Billstrasse 80**
**D-2000 Hamburg 28(DE)**
Anmelder: **N.V. Philips' Gloeilampenfabrieken**
**Groenewoudseweg 1**
**NL-5621 BA Eindhoven(NL)**

(72) Erfinder: **Cramer, Hugo**
**Züricher Weg 26**
**D-5000 Köln 80(DE)**

(74) Vertreter: **Koch, Ingo et al**
**Philips Patentverwaltung GmbH Billstrasse**
**80 Postfach 105149**
**D-2000 Hamburg 28(DE)**

(54) Vorrichtung zum reversierenden Verseilen (SZ-Verseilung) mindestens eines Verseilelements eines Kabels, insbesondere eines Lichtwellenleiter enthaltenden Verseilelements.

(57) Die Erfindung betrifft Vorrichtung zum reversierenden Verseilen (SZ-Verseilung) mindestens eines Verseilelements eines Kabels, insbesondere eines Lichtwellenleiter enthaltenden Verseilelements, um ein Zentralelement, mit einer zwischen Verseilscheibe und Standscheibe angeordneten Lege-Einrichtung, welche in periodischem Wechsel eine Umschlingungslänge des Verseilelements aufnimmt und abgibt, sowie mit einem zwischen Standscheibe und Vorratsrolle angeordneten Spannungsregler zur Vergleichmäßigung der Abzugsgeschwindigkeit von der Vorratsrolle. Auch bei hohen Abzugsgeschwindigkeiten entstehen nur geringe Schwankungen der Abzugskräfte, wenn zwischen Vorratsrolle und Standscheibe (8) zusätzlich eine auf das Verseilelement (1, 2) einwirkende Reibbremse (14, 15, 16) angeordnet ist, deren Reibkraft periodisch entsprechend dem Wechsel der Vorratslänge der Lege-Einrichtung von einem Minimalwert auf einen Maximalwert gesteuert ist.

FIG.1

0 212 732

## Vorrichtung zum reversierenden Verseilen (SZ-Verseilung) mindestens eines Verseilelements eines Kabels, insbesondere eines Lichtwellenleiter enthaltenden Verseilelements.

Die Erfindung bezieht sich auf eine Vorrichtung zum reversierenden Verseilen (SZ-Verseilung) mindestens eines Verseilelements eines Kabels, insbesondere eines Lichtwellenleiter enthaltenden Verseilelements, um ein Zentralelement, mit einer reversierend angetriebenen Verseilscheibe, von welcher das Verseilelement um das Zentralelement gelegt wird, und mit einer feststehenden Standscheibe, durch welche das Verseilelement von einer Vorratstrommel zugeführt wird, mit einer zwischen Verseilscheibe und Standscheibe angeordneten Lege-Einrichtung, welche in periodischem Wechsel eine Umschlingungslänge des Verseilements aufnimmt und abgibt, sowie mit einem zwischen Standscheibe und Vorratsrolle angeordneten Spannungsregler zur Vergleichmäßigung der Abzugsgeschwindigkeit von der Vorratsrolle.

Eine solche Vorrichtung ist durch die DE-PS 28 55 593 bekannt. Dabei werden aufgetrommelte Verseilelemente durch Bohrungen einer raumfesten Standscheibe zu einer mit wechselnder Drehrichtung angetriebenen Verseilscheibe gezogen. Zwischen Standscheibe und Verseilscheibe werden dabei die Verseilelemente im Raum um das Zentralelement von einer rechtsdrehenden Umschlingung über eine gerade gestreckte Lage in eine linksdrehende Umschlingung gewendet. Dabei können die Verseilelemene auf ein das Zentralelement umgebendes Rohr gelegt sein. Vorteilhafter sind jedoch Ausführungen, bei welchen die Umschlingung durch eine Mehrzahl von zwischen Standscheibe und Verseilscheibe gleichmäßig verteilten, mit unterschiedlichen, aber gleichsinnigen Drehgeschwindigkeiten angetriebenen Legescheiben vorgegeben wird. In jedem Fall befindet sich zwischen Standscheibe und Verseilscheibe eine sich im Takt der Reversierfrequenz zwischen einem Minium und einem Maximum ändernde Umschlingungslänge der Verseilelemente. Das hat zur Folge, daß die Verseilelemente bei konstanter Abzugsgeschwindigkeit aus der Verseilscheibe mit pulsierender Geschwindigkeit durch die Standscheibe gleiten. Bei direktem Abzug der Verseilelemente von Vorratstrommeln würden Beschleunigungskräfte zu hohen Zugbelastungen der Verseilelemente führen. Das wird durch einen Spannungsregler verhindert, der im bekannten Falle als drehbare und verschiebbare Rolle ausgebildet ist, welche die über zwei beabstandete raumfeste Rollen geführten Verseilelemente zwischen diese senkrecht zur Abzugsrichtung durchdrückt und damit eine zusätzliche Kompensationslänge speichert, welche im Idealfall die Abnahme der Umschlingungslänge zwischen Standscheibe und Verseilscheibe kompensieren soll.

Es hat sich jedoch gezeigt, daß auch bei hervorragender Längenkompensation dennoch Schwankungen der Abzugskräfte verbleiben, welche die empfinglichen Verseilelemente von Nachrichtenkabeln und insbesondere von optischen Kabeln an der Verseilstelle mit Schwankungen der Zugkraft unzulässig belasten.

Der Erfindung liegt deshalb die Aufgabe zugrunde, die Vorrichtung der eingangs genannten Art derart zu verbessern, daß bei hohen Abzugsgeschwindigkeiten der Verseilelemente möglichst geringe Schwankungen der Abzugskräft entstehen.

Die Lösung gelingt dadurch, daß zwischen Vorratsrolle und Standscheibe zusätzlich eine auf das Verseilelement einwirkende Reibbremse angeordnet ist, deren Reibkraft periodisch entsprechend dem Wechsel der Vorratslänge der Speicher-Einrichtung von einem Minimalwert auf einen Maximalwert veränderlich gesteuert ist.

Der Erfindung liegt die Erkenntnis zugrunde, daß trotz Längenkompensation Schwankungen der Abzugskräfte verbleiben, welche durch Pulsationen der auf die Verseilelemente zwischen Standscheibe und Verseilscheibe zwangsläufig einwirkenden veränderlichen Reibungskräfte entstehen. Das Lösungsprinzip der vorliegenden Erfindung besteht darin, daß die Täler der Reibungskräfte durch eine auf die Verseilelemente einwirkende Reibbremse aufgefüllt werden, so daß die resultierenden Reibungskräfte zu einer zumindest nahezu konstanten Abzugskraft führen.

Im einfachsten Fall könnten die Verseilelemente durch zwei mit pulsierend gesteuerter Kraft gegeneinander gedrückte Reibflächen hindurch geführt werden.

Eine vorteilhaft einfache Lösung besteht darin, daß der Spannungsregler bei gleichzeitiger Ausbildung als Reibbremse aus gegeneinander verschiebbaren drehbaren, das Verseilelement führenden Rollen besteht, deren Abstand periodisch geändert wird, so daß eine periodisch wechselnde Ausgleichslänge des Verseilelements aufgefangen ist, und daß mindesens eine der Rollen mit periodisch wechselnder Bremskraft abgebremst ist.

Eine bevorzugte Ausführungsform ist dadurch gekennzeichnet, daß der Spannungsregler bei gleichzeitiger Ausbildung als Reibbremse aus wechselseitig gegeneinander verschiebbaren, nicht drehbaren Gleitkufen besteht, die das Verseilelement zwischen sich führen und periodisch von annähernd waagerechter Lage in eine gewellte Lage auslenken.

Da die Reibungszunahme infolge der Umschlingung zwischen Stand-und Verseilscheibe gleichsinnig wie die Zunahme der Umschlingungslänge erfolgt, ist es für eine möglichst vollkommene Unterdrückung der zeitabhängigen Schwankung der Abzugskräfte vorteilhaft, daß die Anlagelängen des Verseilelements an den Gleitkufen von einem Minimum bis zu Maximum stetig zunehmen. Der Idealfall, die Reibkräfte der Reibbremse im selben Ausmaß zunehmen, wie die Reibungskräfte zwischen Standscheibe und Verseilscheibe abnehmen, wird dadurch angenähert.

Die Reibbremse muß zwangsweise synchron in Takt mit der Reversierfrequenz der Verseilscheibe wirken, wenn die Verschiebung der Gleitkufen gegeneinander durch einen Verschiebeantrieb erfolgt, welcher durch den Reversierantrieb der Verseilscheibe angetrieben ist.

Der Erfindung wird anhand der Beschreibung von in der Zeichnung dargestellten Ausführungsbeispielen erläutert. Dabei wird die Wirkungsweise der erfindungsgemäß vorgesehenen Reibbremse beispielhaft in Verbindung mit einer SZ-Verseilvorrichtung beschrieben, welche Verlegescheiben zwischen der Standscheibe und der Verseilscheibe aufweist.

Fig. 1 zeigt die prinzipielle Anordnung der wesentlichen Elemente einer erfindungsgemäßen Vorrichtung zum Zeitpunkt, an welchem die Verseilelemente geradlinig zwischen Stand-und Verseilscheibe geführt sind.

Fig. 2 zeigt die Anordnung nach Fig. 1 zu dem Zeitpunkt, an welchem die Verseilelemente in maximaler Umschlingung geführt sind.

Fig. 3 zeigt den zeitlichen Verlauf der zusätzlichen Umschlingungslänge Δl und der Kompensationslänge lu.

Fig. 4 zeigt die Führung eines Verseilelements zwischen zwei benachbarten Verlegescheiben.

Fig. 5 zeigt eine Antriebsanordnung für einen erfindungsgemäß gestalteten Spannungsregler.

Fig. 6 zeigt eine abgewandelte Antriebsanordnung.

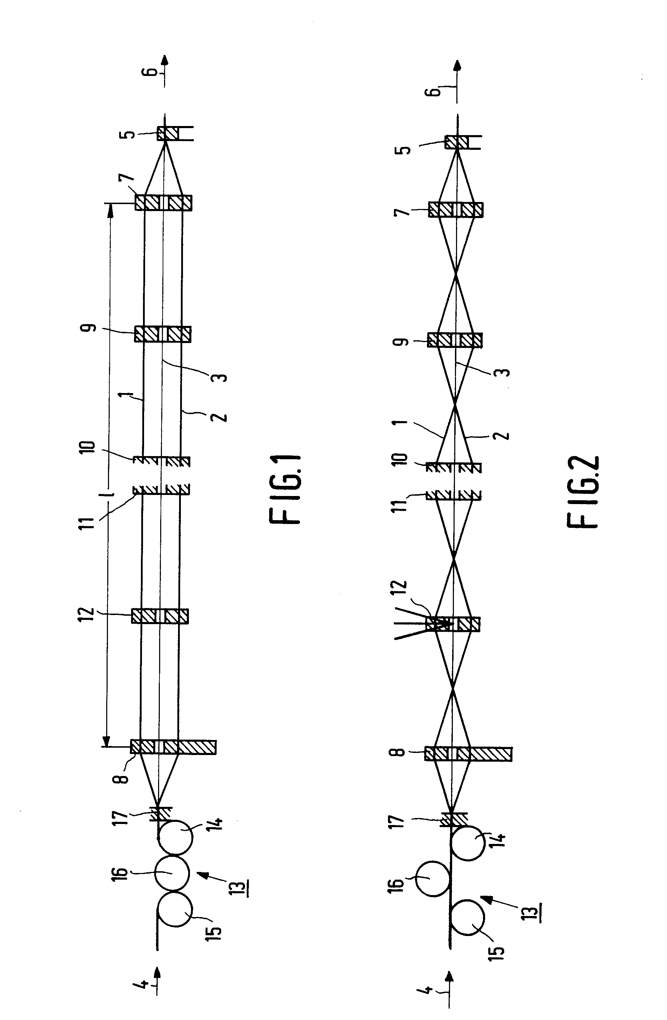

In den Figuren 1 und 2 sind von einer möglichen Vielzahl nur zwei Verseilelemente 1 und 2 angedeutet, welche um ein Zentralelement 3 zu verseilen sind. Diese Elemente werden von nicht dargestellten Vorratstrommeln an der Stelle und in Richtung des Pfeils 4 abgezogen. Eine ebenfalls nicht dargestellte Abzugseinrichtung zieht das Zentralelement mit dem aufgeseilten Verseilelementen durch den raumfesten Verseilnippel 5 in Richtung des Pfeiles 6 mit konstanter Geschwindigkeit ab.

Die Verseilscheibe 7 wird dabei abwechselnd rechts-und linksdrehend um jeweils gleiche Drehwinkel bzw. gleiche Anzahl von Umdrehungen angetrieben, so daß eine Verseilung mit wechselnder Drallrichtung erfolgt. Zwangsläufig ergibt sich dabei zwischen der Verseilscheibe 7 und der raumfesten, nicht rotierenden Standscheibe 8 eine Umschlingung des Zentralelements 3 durch die Verseilemente 1 und 2, wie es in Fig. 2 für den Augenblick angedeutet ist, in welchen eine Reversierung erfolgt. Dagegen ist in Figur 1 die Lage zum Zeitpunkt genau zwischen zwei Reversierzeitpunkten dargestellt, in welchem die Verseilelemete 1 und 2 geradlinig und parallel zum Zentralelement 3 verlaufen, so daß sie zwischen Standscheibe 8 und Verseilscheibe 7 die minimale Länge 1 einnehmen. Beim Weiterdrehen der Verseilscheibe 7 wird eine zusätzliche Umschlingungslänge ..l gespeichert. Zum Reversierzeitpunkt gemäß Fig. 2 befindet sich zwischen Standscheibe 8 und Verseilscheibe 7 die maximale Länge l+ l der Verseilelemente 1 und 2.

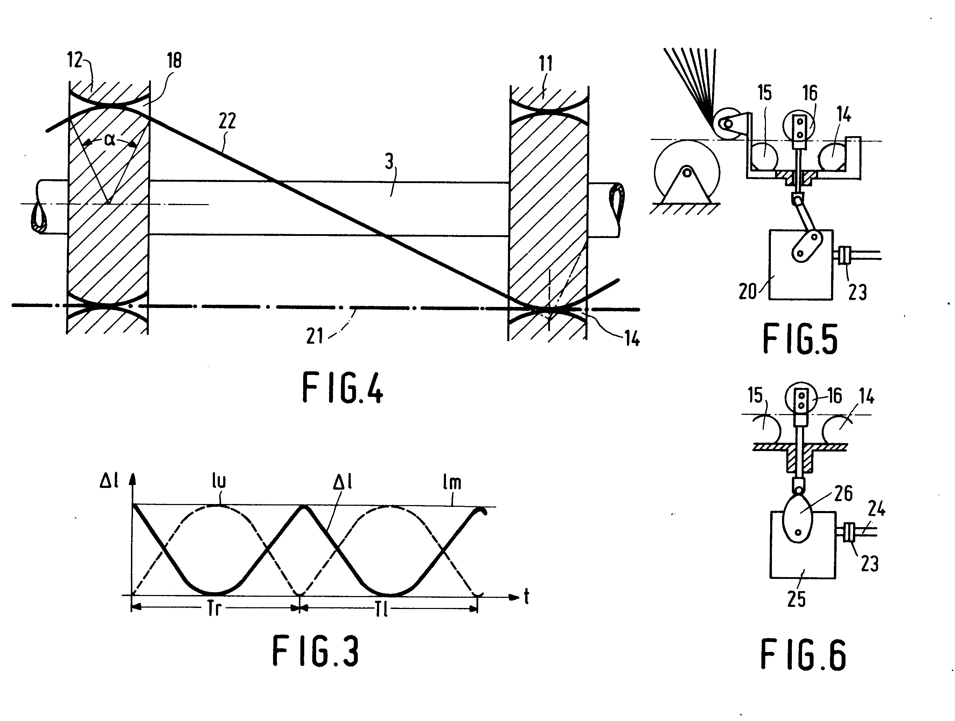

Der Verlauf der zusätzlichen Umschlingungslänge Δl über der Zeit t zeigt Fig. 3. Dabei ist $T_r$ die Dauer beispielsweise der Rechtsdrehung der Verseilscheibe, während $T_l$ die Dauer der Drehung in Gegenrichtung ist. Bei den Maximalwerten von Δl erfolgt jeweils die Reversierung der Verseilscheibe gemäß Fig. 2, während sich für Δl = 0 die Gradeführung der Verseilelemente gemäß Fig. 1 einstellt.

Verlegescheiben 9, 10 11 und 12, welche mit in Richtung auf die Standscheibe 8 stufenweise abnehmender Drehgeschwindigkeit in starrer Kopplung mit der Drehung der Verseilscheibe 7 angetrieben werden, sorgen in bekannter Weise für eine vorgegebene geordnete Führung des Umschlingungsverlaufs.

Damit die Geschwindigkeit der Verseilelement an der Stelle des Pfeils 4 zumindest annähernd konstant bleibt, ist ein Spannungsregler 13 vorgesehen. Zwischen den raumfesten länglichen Führungskörpern 14 und 15 und dem senkrecht zur Abzugsrichtung verschiebbaren länglichen Verschiebekörper 16 sind die Verseilelemente 1 und 2 nebeneinander bis zu und durch zugeordnete Bohrungen einer Verteilerleiste 17 geführt. Wenn wie im Fall der Fig. 2 im Reversierzeitpunkt die maximale Umschlingungslänge zwischen Standscheibe 8 und Verseilscheibe 7 im Verseilfeld gespeichert ist, befindet sich der Verschiebekörper 16 relativ zu den Führungskörpern 14 und 15 in einer solchen Lage, daß die Verseilelemente auf kürzestem Wege geradlinig verlaufen. Wenn gemäß Fig. 1 die Verseilelemente 1 und 2 ohne Umschlingung im Verseilfeld geführt sind, werden sie von dem Verschiebekörper 16 zwischen die Führungskörper 14 und 15 umgelenkt. Die Länge $l_u$ des dadurch bewirkten Umwegs ist gleich der gemäß Fig. 2 im Verseilfeld maximal gespeicherten Umschlingungslänge $\Delta l$.

Die Verschiebung des Verschiebekörpers 16 ist starr gekoppelt mit der Reversierbewegung der Verseilscheibe 7, so daß die Umweglänge $l_u$ den in Fig. 3 gestrichelt dargestellten zeitabhängigen Verlauf hat. Die Summe von ..l und $l_u$ ist konstant (lm), so daß die Verseilelemente 1 und 2 mit konstanter Geschwindigkeit beschleunigungsfrei von den Vorratstrommeln abgezogen werden.

Wenn die Führungskörper 14, 15 und der Verschiebekörper 16 gemäß dem Stand der Technik als frei drehbar gelagerte Rollen ausgeführt werden, ist zwar die Abzugskraft von den Vorratstrommeln konstant. Wenn jedoch die auf die Verseilelemente einwirkende Zugkraft zwischen Verseilscheibe 7 und Verseilnippel 5 gemessen würde, könnte man feststellen, daß diese erheblich im Takte der Reversierfrequenz pulsiert. Die Längskräfte in den Verseilelementen ändern sich zeitlich in gleicher Weise und phasengleich wie die Umschlingungslänge $\Delta l$ gemäß Fig. 3. Der Grund dafür ist, daß durch unterschiedlich große Umschlingungen im Verseilfeld auch unterschiedliche Reibungskräfte verursacht werden, wie es anhand der Fig. 4 näher erläutert wird. Dort ist eine Legefeld zwischen zwei benachbarten Legescheiben 11 und 12 in gegenüber den Fig. 1 und 2 vergrößertem Maßstab mit nur einem Verseilelement dargestellt. Der Verlauf des Verseilelementes ist strichpunktiert in der Lage 21 nach Fig. 1 und voll ausgezogen in der Lage 22 nach Fig. 2 gezeichnet. Ein in der Lage 21 geführtes Verseilelement durchläuft jedes Legefeld nahezu reibungsfrei. Bei der Verdrehung der benachbarten Legescheiben 11 und 12 gegeneinander bis zur Extremlage im Reversierzeitpunkt (im Beispiel um nahezu 180°), entsteht eine stetig zunehmende Reibungskraft. Die Anlagelänge an den Führungsöffnungen 18 und 19 der Legescheiben 11 und 12 wird stetig bis zum Winkel $\alpha$ größer. An diese Anlageflächen werden die Verseilelemente mit bis zur Lage 22 stetig größer werdender Kraft gedrückt, so daß eine zwischen einem Minimum in der Lage 21 und einem Maximum in der Lage 22 pulsierende Reibkraft auf die Verseilelemente ausgeübt wird.

Damit dennoch im Verseilnippel 5 möglichst konstante Längskräfte auf die Verseilelemente einwirken, was insbesondere dann erforderlich ist, wenn die Verseilelemente Lichtwellenleiter enthalten, sind erfindungsgemäß analog zur Längenkompensation Maßnahmen vorgesehen, welche zusätzliche Reibungskräfte in der Weise bewirken, daß die Gesamtreibung annähernd konstant ist.

Eine besonders einfache Lösung besteht darin, die Führungskörper 14 und 15 sowie den Verschiebekörper nicht drehbar auszuführen, so daß die Verseilelemente 1 und 2 mit zunehmender Umschlingung von der Minimalstellung nach Fig. 2 zur Maximalstellung nach Fig. 1 reibend geführt werden. Damit sich zeitabhängig ein möglichst genau kompensierender Verlauf ergibt (ähnlich wie $l_u$ relativ zu $\Delta l$ gemäß Fig. 3), darf der Verschiebekörper 16 höchstens soweit zwischen die Führungskörper 14 und 15 eintauchen, bis er mit diesen in einer Ebene liegt. Der Maximalwert der kompensierenden Reibung des Spannungsreglers 13 kann insbesondere durch die Anzahl der Führungskörper und der zugeordneten Verschiebekörper sowie deren Durchmesser und Reibwerte dem Maximalwert der pulsierenden Reibung im Verseilfeld gleichgemacht werden.

Besonders einfach sind die Führungskörper 14 und 15 sowie der Verschiebekörper 16 als rotationssymmetrische Zylinder herstellbar, in welche in Axialrichtung aufeinander folgend Umfangsrillen zur Führung der Verseilelemente eingebracht sind. Selbstverständlich kann eine beliebige Anzahl von Verseilelementen in der beschriebenen Weise geführt werden.

Der Antrieb des Verschiebekörpers 16 muß, damit eine phasenrichtige Kompensation erfolgt, in starrer Kopplung gleichlaufend mit der Reversierdrehung der Verseilscheibe 7 erfolgen.

Bei der im allgemeinen hinreichend genau die in der Praxis bestehenden Forderungen erfüllenden Lösung nach Fig. 5 wird die Verschiebung des Verschiebekörpers 16 durch einen Kurbelantrieb 20 bewirkt, welcher über eine Kupplung 23 von einer Welle 24 angetrieben wird, die mit der Antriebsvorrichtung für die Verseilscheibe 7 starr gekoppelt ist.

In besonders schwierigen Fällen kann ein Kurvenscheibentrieb 25 nach Fig. 6 verwendet werden. Die Konturen der Kurvenscheibe 26 können in genauer Anpassung so gewählt werden, daß die zeitabhängigen Verläufe der Reibungspulsstationen innerhalb des Verseilfeldes und der kompensierenden Reibung durch den Spannungsregler 13 genau negativ deckungsgleich sind. Bei den in den Figuren 5 und 6 angedeuteten Antriebsmöglichkeiten handelt es sich um vorteilhafte Ausführungsbeispiele. Als weitere Antriebsmöglichkeiten können im Bedarfsfall z.B. ein Kulissengetriebe mit drehrichtungskonstantem Antrieb oder elektronisch gesteuerte Antriebe vorgesehen sein.

Die Erfindung wurde am Beispiel einer SZ-Verseilvorrichtung mit Verlegescheiben erläutert. Analoge Verhältnisse ergeben sich jedoch bei andersartigen bekannten SZ-Verseilvorrichtungen, z.B. bei Verlegung der Umschlingung innerhalb des Verseilfeldes um ein Rohr, so daß die erfindungsgemäße Kompensation sowohl der Längenschwankungen als auch der Reibungsschwankungen für alle Bauarten von SZ-Verseilvorrichtungen in gleicher Weise vorteilhaft anwendbar sind.

**Ansprüche**

1. Vorrichtung zum reversierenden Verseilen - (SZ-Verseilung) mindestens eines Verseilelements eines Kabels, insbesondere eines Lichtwellenleiter enthaltenden Verseilelements, um ein Zentralelement, mit einer reversierend angetriebenen Verseilscheibe, von welcher das Verseilelement um das Zentralelement gelegt wird, und mit einer feststehenden Standscheibe, durch welche das Verseilelement von einer Vorratstrommel zugeführt wird, mit einer zwischen Verseilscheibe und Standscheibe angeordneten Lege-Einrichtung, welche in periodischem Wechsel eine Umschlingungslänge des Verseilelements aufnimmt und abgibt, sowie mit einem zwischen Standscheibe und Vorratsrolle angeordneten Spannungsregler zur Vergleichmäßigung der Abzugsgeschwindigkeit von der Vorratsrolle,

dadurch gekennzeichnet, daß zwischen Vorratsrolle und Standscheibe (8) zusätzlich eine auf das Verseilelement (1, 2) einwirkende Reibbremse (14, 15, 16) angeordnet ist, deren Reibkraft periodisch entsprechend dem Wechsel der Vorratslänge der Lege-Einrichtung von einem Minimalwert auf einen Maximalwert gesteuert ist.

2. Vorrichtung nach Anspruch 1,

dadurch gekennzeichnet, daß der Spannungsregler (14, 15, 16) bei gleichzeitiger Ausbildung als Reibbremse aus gegeneinander verschiebbaren und drehbaren, das Verseilelement führenden Rollen besteht, deren Abstände periodisch geändert werden, so daß eine periodisch wechselnde Ausgleichslänge des Verseilelements (1, 29) aufgefangen ist, und daß mindestens eine der Rollen mit periodisch wechselnder Bremskraft abgebremst ist.

3. Vorrichtung nach Anspruch 1,

dadurch gekennzeichnet , daß der Spannungsregler (13) bei gleichzeitiger Ausbildung als Reibbremse aus wechselseitig gegeneinander verschiebbaren, nicht drehbaren Gleitkufen (14, 15, 16) besteht, die das Verseilelement (1, 2) zwischen sich führen und periodisch von annähernd waagerechter Lage (Fig. 1) in eine gewellte Lage (Fig. 2) auslenken.

4. Vorrichtung nach Anspruch 3,

dadurch gekennzeichnet, daß die Anlagelängen des Verseilelements (1, 2) an den Gleitkufen von einem Minimum bis zum Maximum stetig zunehmen.

5. Vorrichtung nach Anspruch 3 oder 4,

dadurch gekennzeichnet, daß die Gleitkufen zum Verseilelement hin vorgewölbte Gleitflächen aufweisen.

6. Vorrichtung nach Anspruch 3,

dadurch gekennzeichnet, daß die Gleitflächen Zylinderflächen sind.

7. Vorrichtung nach einem der Ansprüche 3 bis 6,

dadurch gekennzeichnet, daß die Verschiebung der Gleitkufen gegeneinander durch einen Verschiebeantrieb (23, 25) erfolgt, welcher durch den Reversierantrieb der Verseilscheibe (7) angetrieben ist.

FIG.1

FIG.2

FIG.5

FIG.6

FIG.4

FIG.3